# EUROPÄISCHE PATENTANMELDUNG

(11) **EP 2 409 811 A1**
(43) Veröffentlichungstag der Anmeldung: **25.01.2012**
(21) Anmeldenummer: 10170313.0
(22) Anmeldetag: 21.07.2010
(51) Int. Cl.: B23Q 7/04, B23Q 17/20

(54) **Produktionszentrum**

(71) Anmelder: Liechti Engineering AG, 3550 Langnau im Emmental (CH)
(72) Erfinder: Scheidegger, Andreas, 3510 Konolfingen (CH); Liechti, Ralph, 3111 Tägertschi (CH)
(74) Vertreter: AMMANN PATENTANWÄLTE AG BERN

(57) **Zusammenfassung**

Das Produktionszentrum weist eine Vorrichtung (1) zum Handhaben von Werkstücken (14) auf. Diese hat einen Manipulator (10) zum Zuführen und Entfernen der Werkstücke zu bzw. von der Werkzeugmaschine und zusätzlich eine Messeinrichtung (11, 12). Dadurch wird eine von den Achsen der Werkzeugmaschine unabhängigen Vermessung der Werkstücke (14) möglich.

## Beschreibung

Die Erfindung betrifft ein Produktionszentrum mit einer Werkzeugmaschine und einer Vorrichtung zum Handhaben von Werkstücken mit einem Manipulator zum Zuführen und Entfernen der Werkstücke zu bzw. von der Werkzeugmaschine.

Bei der Massenproduktion von Teilen, insbesondere Metallteilen ist es bekannt, mit Fertigungszellen zu arbeiten, um die Produktion vom Rohteil zum fertigen vermessenen Werkstück zu automatisieren. Dabei werden die einzelnen Bearbeitungsoperationen wie Sägen, Fräsen, Reinigen, Beschriften, Messen, etc. in dafür ausgerüsteten Stationen ausgeführt. Aufwändige Handlinggeräte transportieren die Werkstücke von Station zu Station und ein zentraler Leitrechner steuert die Abläufe. Die Investitionen in die unproduktiven Transport- und Steuerungssysteme sind so gross, dass sich diese nur lohnt, wenn eine grössere Anzahl Produktionsmaschinen in die Zelle integriert werden. Solche Projekte sind kompliziert in der Realisierung, Finanzierung und später in der Wartung, da nur das funktionierende integrale Gesamtsystem den entsprechenden Nutzen bringt. Die Ausfallwahrscheinlichkeit des Gesamtsystems ist aber normalerweise grösser als diejenige der einzelnen Stationen, da nicht alle Komponenten redundant ausgeführt werden können. So kann beispielsweise der Ausfall eines Transportsystems dazu führen, dass eine ganze Zelle mit mehreren Werkzeugmaschinen so lange vollständig stillsteht, bis die Ursache des Ausfalls behoben ist. Ausserdem ist bei vielen Fertigungszellen eine taktgebundene Arbeitsweise notwendig, so dass die Kapazität etlicher Einzelkomponenten nicht ausgeschöpft werden kann. Die Vermessung der Werkstücke wird bei solchen Anlagen auf der Werkzeugmaschine mit einem Messtaster oder Scanner ausgeführt. Da dabei die Achsen der Werkzeugmaschine als Messnormal verwendet werden, hält diese Methode in vielen Fällen den Qualitätsanforderungen nicht Stand. Deshalb müssen die Werkstücke oft noch zusätzlich auf einer Messmaschine vermessen werden. Weil dabei das Spannmittel in der Werkzeugmaschine oder ein Zusatzmaterial worauf gespannt wird auch zum Halten in der Messmaschine verwendet wird, kann der Spannabschnitt am Werkstück nicht abgetrennt werden.

Ausgehend von diesem Stand der Technik liegt der Erfindung die Aufgabe zu Grunde, ein Produktionszentrum vorzuschlagen, bei dem mehrere Funktionen der Vorbereitung und Nachbearbeitung von Werkstücken integriert sind.

Diese Aufgabe wird erfindungsgemäss dadurch gelöst, dass die Vorrichtung eine Messeinrichtung aufweist.

Somit ermöglicht die Vorrichtung eine von den Achsen der Werkzeugmaschine unabhängigen Vermessung der Werkstücke, wodurch ein zusätzlicher Schritt des Messens auf einer Messmaschine eliminiert wird. Im Gegensatz zu beispielsweise flexiblen Fertigungszellen ist mit der Erfindung ein Zentrum geschaffen, das sich für die Fertigung eines bestimmten Produkts spezialisieren lässt.

Nach einer Ausführungsart ist die Messeinrichtung eine optische Messeinrichtung. Dies erlaubt eine exakte Messung auch kompliziert geformter Werkstücke wie beispielsweise Turbinenschaufeln.

Gemäss einer weiteren Ausführungsart ist der Messeinrichtung eine Hilfsvorrichtung mit Referenzpunkten zugeordnet. Diese umgibt vorteilhaft das Werkstück und erleichtert dadurch präzise Messungen.

Eine andere Ausführungsart sieht vor, dass Transportmittel vorhanden sind, um die Werkstücke in den Wirkungsbereich des Manipulators und von diesem Weg zu bringen. Dies ermöglicht eine vollständige Integration der Vorrichtung in eine Produktionsanlage.

Nach einer weiteren Ausführungsart sind den Transportmitteln Vereinzelungsmittel zugeordnet. Somit ist eine Übergabe der Werkstücke an den Manipulator ohne Eingreifen durch eine Person gewährleistet.

Gemäss einer zusätzlichen Ausführungsart weist die Vorrichtung Mittel zum Verbinden der Werkstücke mit Spannadaptern auf. Damit lassen sich Werkstücke mit hoher Genauigkeit bearbeiten und vermessen.

Wenn nach einer weiteren Ausführungsart die Mittel zum Verbinden der Werkstücke mit Spannadaptern eine Prägevorrichtung enthalten, lässt sich die Sicherheit und Genauigkeit beim Bearbeiten und Vermessen der Werkstücke weiter steigern.

Eine weitere Ausführungsart sieht vor, dass die Vorrichtung eine Zentriervorrichtung aufweist. Damit lassen sich Werkstücke vor dem Bearbeiten auf der Werkzeugmaschine zentrieren und zusätzlich können die Werkstücke zwischen einzelnen Bearbeitungsoperationen nachzentriert werden, beispielsweise wenn sich das Werkstück nach dem Schruppen durch dem Abbau von Spannungen verformt.

Gemäss einer anderen Ausführungsart weist die Vorrichtung Trennmittel zum Abtrennen einer Einspannstelle der Werkstücke auf. Durch Abtrennen der Einspannstelle nach dem Vermessen kann der Bearbeitungsprozess auf der Vorrichtung vervollständigt werden.

Nach einer weiteren Ausführungsart weist die Vorrichtung Mittel zum Reinigen der Werkstücke auf. Auch diese Massnahme ermöglicht eine Vervollständigung des Herstellungsprozesses mit der Vorrichtung.

Gemäss einer weiteren Ausführungsart weist die Vorrichtung Mittel zum Entgraten der Werkstücke auf. Auch diese Massnahme ermöglicht eine Vervollständigung des Herstellungsprozesses mit der Vorrichtung.

Eine weitere Ausführungsart sieht vor, dass die Vorrichtung Mittel zum Beschriften der Werkstücke aufweist. Damit lässt sich beispielsweise ein durch die Vorrichtung erstelltes Messprotokoll dem betreffenden Werkstück eindeutig zuorden.

Schliesslich ist nach einer weiteren Ausführungsart vorgesehen, dass die Komponenten der Vorrichtung an einer säulenartigen Tragstruktur angeordnet sind. Dies erlaubt eine platzsparende Gestaltung der Vorrichtung.

Ein Ausführungsbeispiel der Erfindung wird nachstehend unter Bezugnahme auf die angefügten Zeichnungen beispielsweise näher beschrieben. Es zeigt
- Figur 1: eine perspektivische Ansicht einer Vorrichtung zum Handhaben von Werkstücken und
- Figur 2: die Vorrichtung gemäss Figur 1 und eine Werkzeugmaschine.

Die Vorrichtung zum Handhaben von Werkstücken ist in den Zeichnungsfiguren mit 1 bezeichnet. Die Komponenten der Vorrichtung sind im Beispiel an einer Säule 3 angebaut. Neben der Säule 3 sieht man ein Zuführband 4, auf dem die Werkstücke 14, im Beispiel Quader, herangeführt werden. Das gleiche oder ein anderes, nicht dargestelltes Transportband kann zum Abtransportieren der bearbeiteten Werkstücke verwendet werden. Am Transportband ist ein Transferzylinder 5 angedeutet, der ein Werkstück 14 nach dem anderen zu einer Ladevorrichtung 6 schiebt, welche das Werkstück 14 ergreift.

Im dargestellten Beispiel ist die Vorrichtung 1 mit einer Prägevorrichtung 8 ausgestattet, mit welcher die Werkstücke 14 mit Formschlusselementen ausgestattet werden können, damit sie sich auf einer relativ kurzen Länge exakt einspannen lassen, beispielsweise in einen nicht dargestellten Spannadapter. Zu diesem Zweck ist an der Vorrichtung 1 ein Schrauber 7 vorgesehen. Ferner ist die Vorrichtung 1 auch mit einer Zentriervorrichtung 9 versehen, mit welcher an den Werkstücken 14 jeweils eine Zentrierbohrung angebracht werden kann.

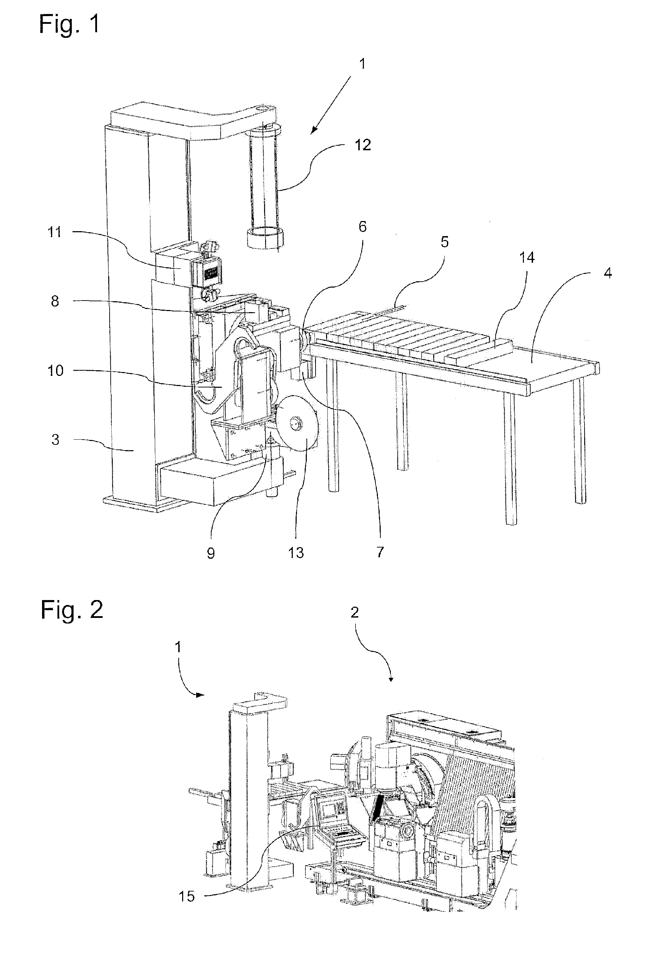

Ein Manipulator 10 ist fähig, die so vorbereiteten Werkstücke 14 einer Werkzeugmaschine 2 (Figur 2) zu übergeben und nach der Bearbeitung auf der Werkzeugmaschine 2 wieder zu übernehmen. Die bearbeiteten Werkstücke 14 werden dann zu einer Messeinrichtung 11 gebracht, wo sie vermessen werden. Im Beispiel ist der Messeinrichtung 11 eine Hilfsvorrichtung 12 mit Referenzpunkten für die Messing zugeordnet. Schliesslich ist an der Vorrichtung 1 auch noch eine Trennsäge 13 angeordnet, mit welcher die Prägestellen abtrennbar sind. Die Vorrichtung 1 kann auch noch eine nicht dargestellte Entgratungseinrichtung enthalten. Mit 15 ist ein Steuerpult für die Vorrichtung 1 und/oder die Werkzeugmaschine 2 dargestellt. Die Vorrichtung kann auch mit einer Einrichtung zum Reinigen der Werkstücke 14 und/oder mit einer Einrichtung zum Entgraten bzw. Trovalisieren der Werkstücke 14 ausgestattet sein. Schliesslich können der Vorrichtung auch noch Beschriftungsmittel, beispielsweise in der Form einer Gravier- oder Laserbeschriftungseinheit zugeordnet sein.

Die dargestellte Gestaltung der Vorrichtung mit einer die Komponenten tragenden Säule 3 ist besonders für längliche Werkstücke 14 wie beispielsweise Turbinenschaufeln gut geeignet. Die Werkstücke 14 können dabei in vertikaler Ausrichtung platzsparend durch die Zentriervorrichtung 9 bearbeitet und durch die Messeinrichtung 11 vermessen werden.

### Bezugszeichenliste

- 1: Vorrichtung
- 2: Werkzeugmaschine
- 3: Säule
- 4: Zuführband
- 5: Transferzylinder
- 6: Ladevorrichtung
- 7: Schrauber
- 8: Prägevorrichtung
- 9: Zentriervorrichtung
- 10: Manipulator
- 11: Messeinrichtung
- 12: Hilfsvorrichtung
- 13: Trennsäge
- 14: Werkstück
- 15: Steuerpult
- 16:
- 17:
- 18:
- 19:
- 20:

## Patentansprüche

1. Produktionszentrum mit einer Werkzeugmaschine (2) und einer Vorrichtung (1) zum Handhaben von Werkstücken (14) mit einem Manipulator (10) zum Zuführen und Entfernen der Werkstücke (14) zu bzw. von der Werkzeugmaschine (2), **dadurch gekennzeichnet, dass** die Vorrichtung (1) eine Messeinrichtung (11) aufweist.

2. Produktionszentrum nach Anspruch 1, **dadurch gekennzeichnet, dass** die Messeinrichtung (11) eine optische Messeinrichtung ist.

3. Produktionszentrum nach Anspruch 2, **dadurch gekennzeichnet, dass** der Messeinrichtung (11) eine Hilfsvorrichtung (12) mit Referenzpunkten zugeordnet ist.

4. Produktionszentrum nach einem der vorangehenden Ansprüche, **dadurch gekennzeichnet, dass** Transportmittel (4) vorhanden sind, um die Werkstücke (14) in den Wirkungsbereich des Manipulators (10) und von diesem weg zu bringen.

5. Produktionszentrum nach Anspruch 4, **dadurch gekennzeichnet, dass** den Transportmitteln (4) Vereinzelungsmittel (5) zugeordnet sind.

6. Produktionszentrum nach einem der vorangehenden Ansprüche, **dadurch gekennzeichnet, dass** die Vorrichtung (1) Mittel (6, 7, 8) zum Verbinden der Werkstücke (14) mit Spannadaptern aufweist.

7. Produktionszentrum nach Anspruch 6,**dadurch gekennzeichnet, dass** die Mittel (6, 7, 8) zum Verbinden der Werkstücke (14) mit Spannadaptern eine Prägevorrichtung (8) enthalten.

8. Produktionszentrum nach einem der vorangehenden Ansprüche, **dadurch gekennzeichnet, dass** die Vorrichtung (1) eine Zentriervorrichtung (9) aufweist.

9. Produktionszentrum nach einem der vorangehenden Ansprüche, **dadurch gekennzeichnet, dass** die Vorrichtung (1) Trennmittel (13) zum Abtrennen einer Einspannstelle der Werkstücke (14) aufweist.

10. Produktionszentrum nach einem der vorangehenden Ansprüche, **dadurch gekennzeichnet, dass** die Vorrichtung (1) Mittel zum Reinigen der Werkstücke (14) aufweist.

11. Produktionszentrum nach einem der vorangehenden Ansprüche, **dadurch gekennzeichnet, dass** die Vorrichtung (1) Mittel zum Entgraten der Werkstücke (14) aufweist.

12. Produktionszentrum nach einem der vorangehenden Ansprüche, **dadurch gekennzeichnet, dass** die Vorrichtung (1) Mittel zum Beschriften der Werkstücke (14) aufweist.

13. Produktionszentrum nach einem der vorangehenden Ansprüche, **dadurch gekennzeichnet, dass** ihre Komponenten an einer säulenartigen Tragstruktur (3) angeordnet sind.
